# EUROPEAN PATENT SPECIFICATION

(11) **EP 2 454 479 B1**
(45) Date of publication and mention of the grant of the patent: **28.10.2015**
(21) Application number: 11728693.0
(22) Date of filing: 30.05.2011
(51) Int. Cl.: F03D 9/00

(54) **POWER GENERATING APPARATUS OF RENEWABLE ENERGY TYPE**
VORRICHTUNG ZUR STROMERZEUGUNG AUS ERNEUERBARER ENERGIE
APPAREIL DE PRODUCTION DE PUISSANCE DU TYPE À ÉNERGIE RENOUVELABLE

(30) Priority: 30.11.2010 WO PCT/JP2010/006978; 30.11.2010 WO PCT/JP2010/006981; 30.11.2010 WO PCT/JP2010/006979; 30.11.2010 WO PCT/JP2010/006977; 30.11.2010 WO PCT/JP2010/006982; 28.05.2010 GB 201009012; 28.05.2010 GB 201009013
(43) Date of publication of application: 23.05.2012
(73) Proprietor: Mitsubishi Heavy Industries, Ltd., Tokyo 108-8215 (JP)
(72) Inventor: TSUTSUMI, Kazuhisa, Tokyo 108-8215 (JP); SHIMIZU, Masayuki, Tokyo 108-8215 (JP); MAEKAWA, Atsushi, Tokyo 108-8215 (JP); NOGUCHI, Toshihide, Tokyo 108-8215 (JP); KOREMATSU, Yasuhiro, Tokyo 108-8215 (JP); CALDWELL, Niall, Midlothian Lothian EH20 9TB (GB); DUMNOV, Daniil, Midlothian Lothian EH20 9TB (GB); SALTER, Stephen, Midlothian Lothian EH20 9TB (GB); STEIN, Uwe, Midlothian Lothian EH20 9TB (GB); RAMPEN, William, Midlothian Lothian EH20 9TB (GB); FOX, Robert, Midlothian Lothian EH20 9TB (GB); ROBERTSON, Alasdair, Midlothian Lothian EH20 9TB (GB); LAIRD, Stephen, Midlothian Lothian EH20 9TB (GB); KARSTENS, Hauke, London Greater London W1K 6WL (GB); PAPPALA, Venkata, London Greater London W1K 6WL (GB)
(74) Representative: Hindle, Alistair Andrew
(86) International application number: PCT/JP2011/003002
(87) International publication number: WO 2011/148653

(56) References cited:
- WO-A1-91/05163
- DE-A1- 1 653 420
- DE-A1- 10 345 406
- US-A- 4 496 847
- US-A- 5 944 493
- US-A1- 2009 155 095
- US-A1- 2010 032 959
- US-A1- 2010 040 470

## Description

### Technical Field

This invention relates to a power generating apparatus of renewable energy type which transmits rotation energy of a rotor obtained from a renewable energy source to a power generating apparatus via a hydraulic transmission having a combination of a hydraulic pump and a hydraulic motor.

### Background Art

In recent years, from a perspective of preserving the environment, it is becoming popular to use a power generating apparatus of renewable energy type such as a wind turbine generator utilizing wind power and a tidal current generator utilizing tidal current.

Such renewable energy devices traditionally employ a transmission in the form of a gearbox to change the slow input speed of an energy extraction mechanism such as the rotor of the wind or tidal turbine generator to which kinetic energy of the renewable energy source is inputted into a fast output speed to drive a power generating apparatus. For example, in a common wind turbine generator, the rotation speed of the rotor is approximately a few rotations to tens of rotations per minute, whereas a rated speed of the power generating apparatus is normally 1500rpm or 1800rpm and thus a mechanical gearbox. Thus, a mechanical gearbox is provided between the rotor and the generator. Specifically, the rotation speed of the rotor is increased to the rated speed of the generator by the gearbox and then inputted to the generator.

Such transmission in the form of the gearbox is challenging to design and build, as they are prone to failure and expensive to maintain and replace or repair.

A further challenge in designing power generating apparatuses of renewable energy type is extracting the optimum amount of energy by an energy extraction mechanism in all conditions. The most effective devices achieve this by holding the blades at a fixed pitch angle, and varying the rotational speed of the blades proportionally to the wind or water speed over the majority of the operating range, so as to maintain a more or less constant 'tip speed ratio'. Gearboxes at the scale required for cost effective power generating apparatuses of renewable energy type are invariably fixed ratio, so complex and failure-prone electronic power conversion is required to provide electricity to an AC electricity network.

In recent years, power generating apparatuses of renewable energy type equipped with a hydraulic transmission adopting a combination of a hydraulic pump and a hydraulic motor of variable displacement type are getting more attention as an alternative to the mechanical gearboxes. In such power generating apparatuses, it is possible to make the hydrostatic transmission variable ratio even at large scales. Such a hydrostatic transmission is also lighter and more robust than a gearbox, and lighter than a direct generator drive unit. Thus, the overall cost of producing electricity is reduced.

A structure of a hydraulic transmission applied to a wind turbine generator is disclosed in Non-Patent Literature 1. The hydraulic transmission includes a hydraulic pump connected to a rotor, a hydraulic motor connected to a generator and a high pressure manifold and a low pressure manifold arranged between the hydraulic pump and the hydraulic motor respectively. Each of the hydraulic pump and motor includes a plurality of cylinders and pistons and changes the displacement by continuously activating and disabling of the working chambers formed between the cylinders and pistons

As a related technique, Patent Literature 1 provides a wind turbine generator using a hydraulic transmission having a combination of a hydraulic pump driven by rotation of a rotor and a hydraulic motor connected to a generator. In the hydraulic transmission of the wind turbine generator, the hydraulic pump and the hydraulic motor are connected via a high pressure reservoir and a low pressure reservoir respectively. This allows the rotation energy of the rotor to be transmitted to the generator via the hydraulic transmission. The hydraulic pump is constituted of a plurality of pistons and cylinders and a cam which moves the piston within the cylinder periodically.

Further, Patent Literature 2 describes a wind turbine generator adopting a hydraulic transmission constituted of a hydraulic pump rotated by a rotor, a hydraulic motor connected to a generator, and an oil path arranged between the hydraulic pump and the hydraulic motor. In the hydraulic transmission of this wind turbine generator, the hydraulic pump is constituted of a plurality of sets of pistons and cylinders, cams which periodically reciprocate the pistons in the cylinders, and high pressure valves and low pressure valves which open and close with the reciprocation of the pistons. By latching the piston near a top dead center, a working chamber surrounded by the cylinder and the piston is disabled, and then the displacement of the hydraulic pump is changed.

Although the hydraulic pump and the hydraulic motor are not variable displacement type, Patent Literature 3 discloses a wind turbine generator having a hydraulic pump and a hydraulic motor. The wind turbine generator of Patent Literature 3 maintains the rotation speed of the generator constant by adjusting the pressure of hydraulic oil to be supplied from a hydraulic pump to a hydraulic motor. In this wind turbine generator, a discharge side of the hydraulic pump is connected to an intake side of the hydraulic motor via an inner space of the tower functioning as a high pressure tank, and an intake side of the hydraulic pump is connected to a discharge side of the hydraulic motor via a low pressure tank arranged below the tower.

### Citation List

### Non Patent Literature

NPL 1: W.H.S. Rampen,et al., "Gearless transmissions for large wind-turbines - The history and future of hydraulic drives", DEWEK Bremen, Dec. 2006

### Patent Literature

PTL 1: US 2010/0032959A
PTL 2: US 2010/0040470A
PTL 3: US7436086B

### Summary of Invention

### Technical Problem

In the power generating apparatuses of renewable energy type such as described above, it is desired to extract energy efficiently from the renewable energy source and to maintain power generation efficiency high. However, the renewable energy source used in such power generating apparatuses are normally natural energy such as wind power and tidal current and energy available for power generation fluctuates significantly. Thus, it is difficult to perform energy extraction at maximum efficiency. Particularly, the renewable energy is highly temporally-unstable in a short period of time and it is necessary to perform the control in response to the fluctuating energy in order to extract energy efficiently.

In view of this, Non-Patent Literature and Patent Literatures 1 and 2, propose to adjust the displacement of the hydraulic pump or the hydraulic motor in response to the fluctuating energy. However, none of the literatures above suggests a specific structure for adjusting the displacement of the hydraulic pump or motor with high accuracy according to control signals. Further, as described in Patent Literature 3, in the structure where a proportional valve is arranged the an oil line between the high pressure tank and the hydraulic motor, it is difficult to perform fine control as the proportional valve is located where the flow rate of the hydraulic oil is great.

In view of the above issues, an object of the present invention is to provide a power generating apparatus of renewable energy type which can control the hydraulic transmission with high accuracy according to control signals.

### Solution to Problem

The present invention provides a power generating apparatus of renewable energy type which generates power from a renewable energy source. The power generating apparatus of renewable energy type may include, but is not limited to: a rotating shaft driven by the renewable energy source; a hydraulic pump driven by the rotating shaft; a hydraulic motor which is driven by pressurized oil supplied from the hydraulic pump; a generator coupled to the hydraulic motor; a high pressure oil line through which a discharge side of the hydraulic pump is in fluid communication with an intake side of the hydraulic motor; and a low pressure oil line through which an intake side of the hydraulic pump is in fluid communication with a discharge side of the hydraulic motor. And each of the hydraulic pump and the hydraulic motor may include, but is not limited to: a plurality of working chambers each of which is surrounded by a cylinder and a piston reciprocating within the cylinder; a high pressure manifold including first branch channels each connected to the working chambers and a first merging channel connected to the high pressure oil line, the first branch channels joining together and merging into the first merging channel; a low pressure manifold including second branch channels each connected to the working chambers and a second merging channel connected to the low pressure oil line, the second branch channels joining together and merging into the second merging channel; a plurality of high pressure valves which are respectively provided in the first branch channels of the high pressure manifold to open and close the first branch channels; a plurality of low pressure valves which are respectively provided in the second branch channels of the low pressure manifold to open and close the second branch channels; and a casing which accommodates the working chambers, the high pressure manifold, the low pressure manifold, the high pressure valves and low pressure valves.

In the power generating apparatus of renewable energy type, the high pressure valves are arranged in the first branch channels connected to the working cylinders and the low pressure valves are arranged in the second branch channels. Thus, it is possible to tweak the valves with high accuracy in accordance with the control signals to the hydraulic transmission. This achieves high power generation efficiency even in fluctuations of the renewable energy.

Further, the casing accommodates the working chambers, the high pressure manifold, the low pressure manifold, the high pressure valves and the low pressure valves, thereby downsizing the apparatus.

In the power generating apparatus of renewable energy type, at least one of the hydraulic pump and the hydraulic motor may include a cylinder block accommodated in the casing. The cylinders are provided inside the cylinder block. And the first branch channels and the second branch channels of the at least one of the hydraulic pump and the hydraulic motor may be arranged inside the cylinder block.

In this manner, the first branch channels and the second branch channels may be arranged inside the cylinder block. Thus, it is no longer necessary to install a piping from the working chambers to the first and second merging channels respectively, thereby downsizing the hydraulic pump or the hydraulic motor.

In the power generating apparatus of renewable energy type, the first merging channel of the high pressure manifold of at least one of the hydraulic pump and the hydraulic motor may be provided inside an endplate that forms an motor in a direction of a rotation central axis of the at least one of the hydraulic pump and the hydraulic motor.

In this manner, the first merging channel of the high pressure manifold of one of the hydraulic pump and the hydraulic motor is provided inside the endplate that forms the end face of the casing. Thus, it is possible to prevent the hydraulic oil having high pressure from leaking, thereby improving liquid tightness.

In the power generating apparatus of renewable energy type, a plurality of cylinder arrays may be arranged inside the cylinder block in a circumferential direction of the at least one of the hydraulic pump and the hydraulic motor, each of the cylinder arrays being constituted of the cylinders aligned in a direction of a rotation central axis of the at least one of the hydraulic pump and the hydraulic motor, a high pressure communication channel may be provided inside the cylinder block between adjacent two of the cylinder arrays, and the first branch channels connected to the working chambers of the cylinders belonging to one or the adjacent two of the cylinder arrays may be in fluid communication with the first merging channel via the high pressure communication channel.

In this manner, the first branch channels are in fluid communication with the first merging channel via the high pressure communication channel formed between adjacent two of the cylinder arrays. Thus, it is possible to simplify the structure of the oil path, thereby saving space.

In the power generating apparatus of renewable energy type, an annular space between the casing and the cylinder block may form the second merging channel of the low pressure manifold in the at least one of the hydraulic pump and the hydraulic motor.

In this manner, the second merging channel of the low pressure manifold is formed in the annular space between the casing and the cylinder block. Thus, it is possible to utilize the space between the casing and the cylinder block, thereby saving space and simplifying the structure of the path.

In the power generating apparatus of renewable energy type, the high pressure manifold of the hydraulic pump may be directly connected to the high pressure manifold of the hydraulic motor through the high pressure oil line without any intervening valves that restrict oil flow in the high pressure oil line, and the low pressure manifold of the hydraulic pump may be directly connected to the low pressure manifold of the hydraulic motor through the low pressure oil line without any intervening valves that restrict oil flow in the low pressure oil line.

When a valve is provided in the high pressure oil line, the valve may restrict oil flow, thereby causing energy loss and resulting in reduction of energy efficiency. Therefore, as described above, the high pressure manifold of the hydraulic pump is directly connected to the high pressure manifold of the hydraulic motor through the high pressure oil line without any intervening valves, thereby producing power at high efficiency without causing energy loss. Without any intervening valves in the high pressure oil line and the low pressure oil line, it is possible to simplify the piping structure connecting the hydraulic pump and the hydraulic motor, thereby downsizing the apparatus.

In the power generating apparatus of renewable energy type may further include a bypass passage which connects the high pressure oil line and the low pressure oil line to bypass the hydraulic motor, and a high pressure relief valve which is provided in the bypass passage.

For instance, the pressure in the high pressure oil line rises to a setting pressure of the high pressure relief valve, the high pressure relief valve opens to release the high pressure oil to the low pressure oil line via the bypass passage, thereby keeping the pressure in the high pressure oil line within an appropriate range.

The power generating apparatus of renewable energy type may further include at least one accumulator valve and at least one accumulator which is connected to the high pressure oil line through the at least one accumulator valve respectively. The at least one accumulator valve may open and close to switch between a state where the at least one accumulator is in fluid communication with the high pressure oil line and a state where the at least one accumulator is isolated from the high pressure oil line.

In this manner, the accumulator valve opens and closes to connect and disconnect the accumulator to the high pressure oil line. Thus, it is possible to save surplus energy inputted to the hydraulic transmission and to discharge the save surplus energy when the output power is short, thereby achieving a stable power generation of the wind power energy, which tends to fluctuate.

In the power generating apparatus of renewable energy type, the high pressure valves of the hydraulic pump may open to allow hydraulic oil to flow from the working chambers of the hydraulic pump to the high pressure oil line through the high pressure manifold when pressure in the working chambers exceeds pressure in the high pressure oil line.

Meanwhile, the low pressure valves of the hydraulic pump may open to allow hydraulic oil to flow from the low pressure oil line to the working chambers of the hydraulic pump through the low pressure manifold when pressure in the working chambers falls below the pressure in the low pressure oil line.

The above configurations may be selected as desired to eliminate complicated valve control and simplify the control.

In the power generating apparatus of renewable energy type, at least one of the high and low pressure valves of the hydraulic pump and the hydraulic motor may be a pressure-operated check valve which is openable to allow hydraulic oil to flow in one direction due to pressure difference across the at least one of the high and low pressure valves.

In this manner, the check valve which opens and closes due to the pressure difference is used for at least one of the high and low pressure valves of the hydraulic pump and the hydraulic motor, thereby saving electric power used to open and close the valve and also reducing running cost. Further, the hydraulic oil is allowed to flow in one direction, thereby preventing the hydraulic oil from regurgitating.

In the power generating apparatus of renewable energy type, the at least one of the high and low pressure valves of the hydraulic pump and the hydraulic motor may be an electronically controlled valve, and the power generating apparatus of renewable energy type may also include a controller which controls opening and closing of the electronically controlled valve in phased relation to cycles of movement of the piston to adjust net volume of hydraulic oil displaced by the working chambers on each of the cycles.

In such case, the controller may change number of the working chambers in idle state to adjust the net volume of the hydraulic oil displaced by the working chambers on each of the cycles, the low pressure valves of the working chambers in the idle state being kept open for a full cycle of the movement of the piston.

In this manner, the number of the working chamber in idle state is changed to adjust the net volume of the hydraulic oil displaced by the working chambers, thereby controlling the displacement gradually and making such control easier.

The controller may also change closure timing of at least one group of the low pressure valves and the high pressure valves in each cycle of the movement of the piston to adjust the net volume of the hydraulic oil displaced by the working chambers on each of the cycles, the closure timing being changed commonly for all valves belonging to the at least one group of the low pressure valves and the high pressure valves.

In this manner, the closure timing of the valves of the same group are synchronized, thereby improving the control stability and making it easy to know the time for maintenance.

In the power generating apparatus of renewable energy type, the at least one of the high and low pressure valves of the hydraulic pump and the hydraulic motor may be an electronically controlled valve. The electronically controlled valve is a face-sealing poppet valve which is not openable against a prescribed pressure.

In such case, the at least one of the high and low pressure valves of the hydraulic pump and the hydraulic motor may be an electronically controlled valve, and the power generating apparatus of renewable energy type may further include a controller which controls opening and closing of the electronically controlled valve to counter fluctuations in torque and flow arising from asymmetric flow of hydraulic oil out of the working chamber during each cycle of movement of the piston.

In this manner, the fluctuations in torque and flow arising from asymmetric flow is suppressed, thereby achieving a stable operation.

In the power generating apparatus of renewable energy type, each of the low pressure valves of the hydraulic pump may be a normally open solenoid closed valve which opens passively when pressure in the working chamber is less than pressure in the low pressure oil line.

In this manner, each of the low pressure valves opens passively when the pressure in the working chamber is less than the pressure in the low pressure oil line, thereby saving electric power required for exciting the valve. When the pressure in the working chamber increases inappropriately, the low pressure valve is released, thereby preventing abnormal pressure rise in the working chamber.

In the power generating apparatus of renewable energy type may further include a pressure sensor which measures pressure of hydraulic oil in the high pressure oil line, and a temperature sensor which is provided in one of the high pressure oil line and the low pressure oil line to measure temperature of hydraulic oil in the one of the high pressure oil line and the low pressure oil line. For instance, the high pressure valve or the low pressure valve may be controlled based on the measured pressure and/or temperature, thereby achieving a proper control.

In the power generating apparatus of renewable energy type, the power generating apparatus may be a wind turbine generator which generates power from wind as the renewable energy source.

In the wind turbine generator, the wind power energy fluctuates significantly. However, with the structure of the above power generating apparatus of renewable energy type, the apparatus can be controlled with accuracy in response to the fluctuations of the wind power energy, thereby achieving stable power generation.

### Advantageous Effects of Invention

According to the present invention, in the hydraulic pump and the hydraulic motor, the high pressure valves are arranged in the first branch channels connected to the working cylinders and the low pressure valves are arranged in the second branch channels. Thus, it is possible to tweak the valves with high accuracy in accordance with the control signals to the hydraulic transmission. This achieves high power generation efficiency even in fluctuations of the renewable energy.

Further, the casing of the hydraulic pump and the hydraulic motor respectively accommodates the working chambers, the high pressure manifold, the low pressure manifold, the high pressure valves and the low pressure valves, thereby downsizing the apparatus.

### Brief Description of Drawings

[fig.1]Fig. 1 is a schematic view of an example structure of a wind turbine generator.
[fig.2]Fig. 2 is a schematic view of a hydraulic pump of the wind turbine generator.
[fig.3]Fig. 3 is a schematic view of a hydraulic motor of the wind turbine generator.
[fig.4]Fig. 4 is a sectional view illustrating a specific structure of the hydraulic pump.
[fig.5]Fig. 5 is a sectional view taken along the line A-A of FIG.4.
[fig.6]Fig. 6 is a sectional view taken along the line B-B of FIG.5, showing a cylinder block of the hydraulic pump.
[fig.7]Fig. 7 is a plan view of the cylinder block taken from the direction C of FIG.4.
[fig.8]Fig. 8 is a sectional view taken along the line D-D of FIG.4, showing an endplate of the hydraulic pump.
[fig.9]Fig. 9 is a sectional view showing a specific structure of the hydraulic motor.
[fig.10]Fig. 10 is a sectional view taken along the line E-E of FIG.9.
[fig.11]Fig. 11 is a sectional view of the endplate of the hydraulic motor, taken along the line F-F of FIG.9.
[fig.12]Fig. 12 is a perspective external view of the hydraulic motor.
[fig.13]Fig. 13 is a sectional view showing a modified example of the hydraulic motor.

### Description of Embodiments

A preferred embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.

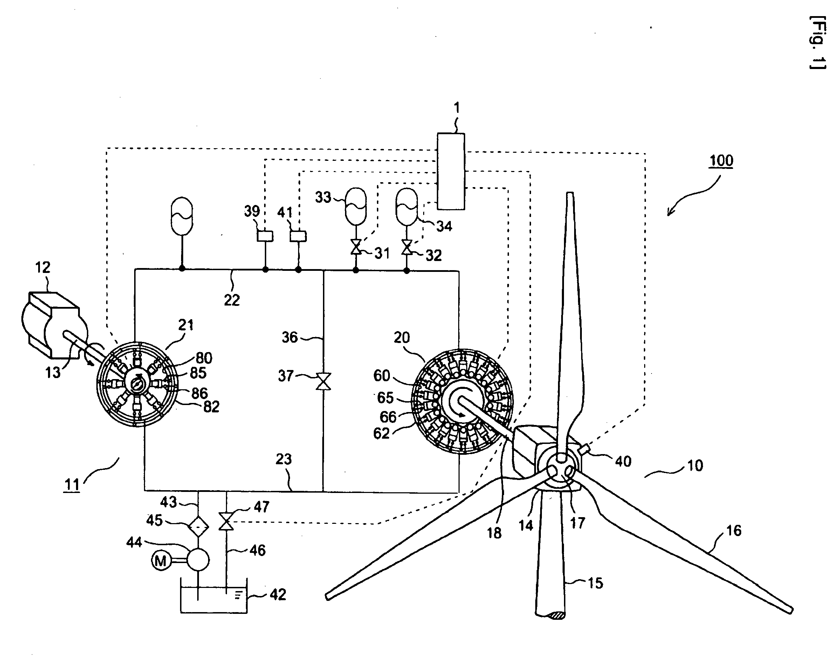

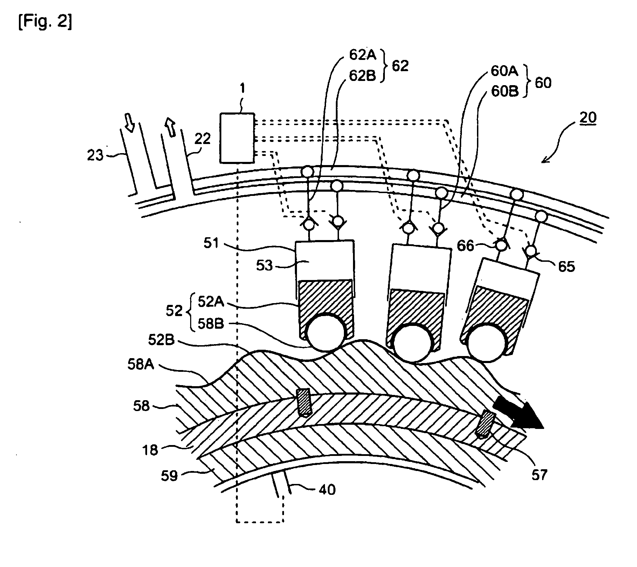

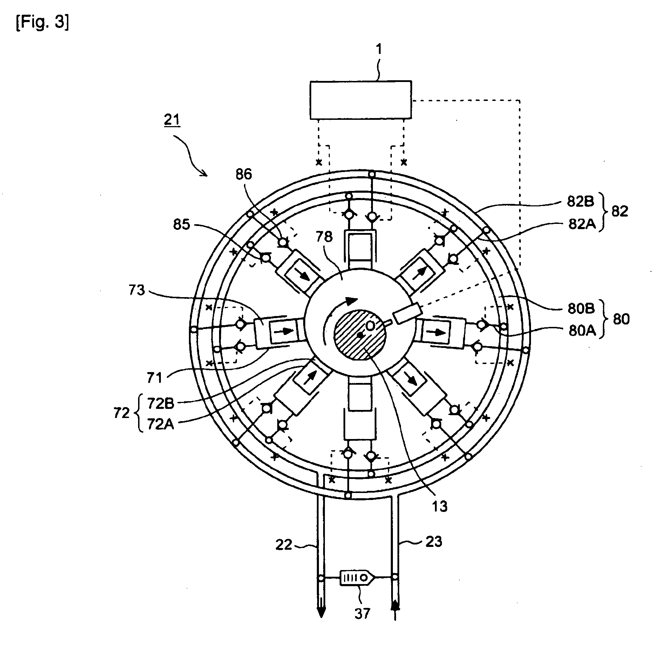

A general structure of the wind turbine generator in relation to the present invention is explained hereinafter. Fig. 1 is a schematic view showing an example structure of the wind turbine generator. Fig. 2 is a schematic view showing an example structure of the hydraulic pump of the wind turbine generator. Fig. 3 is a schematic view showing an example configuration of the hydraulic motor of the wind turbine generator.

As an example of the wind turbine generator, a three-bladed wind turbine generator is used. However, the present invention is not limited to this example and can be applied to various types of wind turbine generators.

As illustrated in Fig. 1, a wind turbine generator 100 includes a rotor 10 rotated by the wind, a hydraulic transmission 11 for increasing rotation speed of the rotor 10, a generator 12 for generating electric power, a nacelle 14 and a tower 15 for supporting the nacelle 14.

The rotor 10 is configured such that a rotating shaft 18 (equivalent of a rotation shaft of the hydraulic pump) is connected to a hub 17 having blades 16. Specifically, three blades 16 extend radially from the hub 17 and each of the blades 16 is mounted on the hub 17 connected to the rotating shaft 18. By this, the power of the wind acting on the blades 16 rotates the rotor 10 as a whole, and the rotation of the rotor 10 is inputted to the hydraulic transmission 11 via the rotating shaft 18. The hub 17 may house a pitch driving mechanism for changing a pitch angle of the blades 16.

The hydraulic transmission 11 includes a hydraulic pump 20 of a variable displacement type which is rotated by the rotating shaft 18, a hydraulic motor 21 of a variable displacement type which is connected to the generator 20 via a crank shaft 31, and a high pressure oil line 22 and a low pressure oil line 23 which are arranged between the hydraulic pump 20 and the hydraulic motor 21. The high pressure oil line 22 connects a discharge side of the hydraulic pump 20 and an intake side of the hydraulic motor 21. The low pressure oil line 23 connects a discharge side of the hydraulic motor 21 and an intake side of the hydraulic pump 20. By this, the rotation of the rotating shaft 18 rotates the hydraulic pump 20, thereby creating a pressure difference between the high pressure oil line 22 and the low pressure oil line 23. The pressure difference drives the hydraulic motor 21. The hydraulic transmission 11 adjusts a speed increasing ratio (displacement ratio of the hydraulic pump 20 and the hydraulic motor 21) in accordance with the rotation speed of the rotating shaft 18 so as to maintain the rotation speed of the hydraulic motor 21 at a constant speed. The hydraulic transmission is described in details later.

The generator 12 is connected to the hydraulic motor 21 of the hydraulic transmission 11. The known synchronous generator or induction generator can be used as the generator 12. The torque having the rotation speed that is almost constant is inputted from the hydraulic motor 21 to the generator 12 and then the generator 12 produces AC power having a frequency that is almost constant.

The nacelle 14 supports the hub 17 of the rotor 10 rotatably and houses a variety of devices such as the hydraulic transmission 11 and the generator 12. The nacelle 14 is further supported on the tower 15 rotatably and may be turned in accordance with the wind direction by a yaw motor which is not shown.

Further, a rotation speed meter 40 which measures the rotation speed of the rotating shaft 18, a first pressure meter 41 which measures the pressure in the high pressure oil line 22, and a temperature sensor 39 which measures a temperature of the hydraulic oil in the high pressure oil line 22 are provided in the wind turbine generator 100. The measurement results of the rotation speed meter 40 and the first pressure meter 41 are sent to a controller 1 to control the hydraulic pump 20 and the hydraulic motor 21. The controller 1 controls each component of the wind turbine generator. A variety of signals are inputted to the controller 1, such as a rotation speed signal of the rotation speed meter, a high pressure oil signal of the first pressure meter 41, a hydraulic oil temperature signal of the temperature sensor 39, a pressure signal of an accumulator which is described later, a rotation speed signal of the hydraulic pump 20 and a rotation speed signal of the hydraulic motor 21. Based on at least one of the input signals as described above, high pressure valves 65, 85, low pressure valve 66, 86, accumulator valves 31, 32, the high pressure relief valve 37, and the low pressure relief valve 47 may be controlled. The controller 1 includes a variety of control devices and the controller 1 and such control devices may be located in different locations either inside or outside of the nacelle 14, so that the controller 1 may form a distributed control system. It is also possible that the functions of more than one of the controllers 1 and the control devices may be combined into one computer processing unit.

The accumulator 33, 34 is connected to the high pressure oil line 22 via accumulator valve 31, 32. The accumulator 31, 32 may be, for instance, a bladder type or a piston type in which air and hydraulic fluid are separated by a deformable bag. In the accumulator 33, 34, the hydraulic oil of high pressure is introduced during an accumulating process so as to deform the bladder or push the piston to compress the air. In contrast, during a pressure-releasing process, the compressed air expands or the high pressure air from outside pushes the bladder or the piston to push the hydraulic oil out of the accumulator 33,34.

A second pressure meter (not shown) is provided between the accumulator valve 31, 32 and the accumulator 33, 34. The second pressure meter measures the pressure of the hydraulic oil in the accumulator 33, 34.

Measurement results of the first pressure sensor 41 and the second pressure sensor are sent to controller 1 to be used for controlling the opening and closing of the accumulator valve 31, 32. The controller 1 preferably controls the opening and closing of the accumulator valve 31, 32 based on the measurement results of the first pressure sensor 41 and the second pressure sensor. In this manner, the opening and closing of the accumulator valve 31, 32 is controlled to bring the accumulator 33, 34 in or out of communication with the high pressure oil line 22. Thus, it is possible to save surplus energy inputted to the hydraulic transmission 11 and to discharge the surplus energy when the output power is short, thereby achieving a stable power generation of the wind power energy, which tends to fluctuate.

The bypass passage 36 is provided between the high pressure oil line 22 and the low pressure oil line 23. And, a high pressure relief valve 37 is provided in the bypass passage 70 to maintain the pressure of the hydraulic oil in the high pressure oil line 22 not greater than the setting pressure. In this manner, when the pressure in the high pressure oil line 22 rises to the setting pressure of the high pressure relief valve 37, the high pressure relief valve 37 automatically opens so as to release the high pressure oil to the low pressure oil line 23 via the bypass passage 36.

Further, the hydraulic transmission 11 has an oil tank 42, a supplementary line 43, a boost pump 44, an oil filter 45, a return line 46 and a low pressure relief valve 47.

All or part of the return flow from the hydraulic motor 22 may pass through at least one of these units.

As shown in Fig. 2, the hydraulic pump 20 has a plurality working chambers 53 surrounded by the cylinders 51 and the pistons 52, the cam 58 having a cam surface which engages with the pistons 52, the high pressure manifold 60 connecting each of the working chambers 53 and the high pressure oil line 22, the low pressure manifold 62 connecting each of the working chambers and the low pressure oil line 23, and sets of a high pressure valve 65 and a low pressure valve 66, each set of which is provided for each of the working chambers 53.

The cylinder 51 is a cylindrical space formed in a cylinder block that is described later. Inside the cylinder 51, is formed the working chamber 53 surrounded by the cylinder 51 and the piston 52.

From the perspective of operating the pistons 52 smoothly along the cam surface of the cam 58, each of the pistons 52 preferably includes a piston body 52A which moves slidingly in the cylinder 51 and a piston roller or a piston shoe which is mounted on the piston body 52A and engages with the cam surface of the cam 58. The "piston roller" is a member that comes in contact with the cam surface of the cam 58 and rolls thereon. The "piston shoe" is a member that comes in contact with the cam surface of the cam 58 and slides thereon.

The example illustrated in Fig. 2 shows the pistons 52 each of which has the piston body 52A and the piston roller 52B.

The cam 58 is installed on an outer circumference of the rotating shaft 18 via a cam mount 59. For one rotation of the rotating shaft 18, the cam 58 moves each of the pistons 52 of the hydraulic pump 20 upward and downward many times, thereby increasing the torque of the hydraulic pump 20. From this point of view, the cam 58 is preferably a ring cam that has a cam surface defining a plurality of waves with concave portions 58A and convex portions 58B that are alternately disposed around the rotating shaft 18.

The cam 58 is fixed to the cam mount 59 by means of a securing member 57 such as a bolt, a key and a pin.

The high pressure manifold 60 includes the first branch channels 60A each connected to the working chambers 53 and the first merging channel 60B connected to the high pressure oil line 22. The first branch channels 60A join together and merge into the first merging channel 60B.

The low pressure manifold 62 includes the second branch channels 62A each connected to the working chambers 53 and the second merging channel 62B connected to the low pressure oil line 23. The second branch channels 62A join together and merge into the second merging channel 62B.

The high pressure valve 65 is arranged in the first branch channels 60A of the high pressure manifold 60, whereas the low pressure valve 66 is arranged in the first branch channels 62A of the low pressure manifold 62. By opening and closing the high pressure valve 65 and the low pressure valve 66, it is possible to change a communication status between the high pressure oil line 22 and each of the working chambers 53 and between the low pressure oil line 23 and each of the working chambers 53. The opening and closing of the high pressure valve 65 and the low pressure valve 66 is performed in synchronization with the upward and downward motion of the piston 52.

Preferably, the high pressures valve 65 open to allow hydraulic oil to flow from the working chambers 53 of the hydraulic pump 20 to the high pressure oil line 22 through the high pressure manifold 60 when pressure in the working chambers 53 exceeds pressure in the high pressure oil line 22. The low pressure valves 66 preferably open to allow hydraulic oil to flow from the low pressure oil line 23 to the working chambers 53 of the hydraulic pump 20 through the low pressure manifold 62 when pressure in the working chambers 53 falls below the pressure in the low pressure oil line 23. By this, it is possible to eliminate complicated valve control and simplify the control.

Further, the low pressure valves 66 of the hydraulic pump is preferably a normally open solenoid closed valve which opens passively when pressure in the working chamber 53 is less than pressure in the low pressure oil line 23. In this manner, each of the low pressure valves 66 opens passively when the pressure in the working chamber is less than the pressure in the low pressure oil line 23, thereby saving electric power required for exciting the valve. When the pressure in the working chamber 53 increases inappropriately, the low pressure valve 66 is released, thereby preventing abnormal pressure rise in the working chamber 53.

In the hydraulic pump 20, when the cam 58 rotates with the rotating shaft 18, the piston body 52A of each piston 52 moves upward and downward periodically. In the hydraulic pump 20, a pump step in which the piston 52 moves from the bottom dead center to the top dead center and an intake step in which the piston 52 moves from the top dead center to the bottom dead center are performed repeatedly. In the pump step, the high pressure valve 65 is opened and the low pressure valve 66 is closed so as to feed the high pressure oil in the working chamber 53 through the first branch channel 60A and the first merging channel 60B to the high pressure oil line 22 in this order. Meanwhile, in the intake step, the high pressure valve 65 is closed and the low pressure valve 66 is opened so as to supply the low pressure oil from the low pressure oil line 23 through the second merging channel 62B and the second branch channels 62A to the working chamber 53 in this order.

In this manner, the hydraulic pump 20 is rotated by the rotation of the rotating shaft 18, thereby generating the pressure difference between the high pressure oil line 22 and the low pressure oil line 23.

As illustrated in Fig. 3, the hydraulic motor 21 includes a plurality of hydraulic chambers 73 formed between the cylinders 71 and the pistons 72, the cam 78 having a cam surface which engages with the pistons 72, the high pressure manifold 80 connecting each of the working chambers 73 and the high pressure oil line 22, the low pressure manifold 82 connecting each of the working chambers 73 and the low pressure oil line 23, and the high pressure valve 85 and the low pressure valve 86 that are provided for each of the working chambers 73.

The cylinder 71 is a cylindrical space provided for a cylinder block that is described later. Inside the cylinder 71, formed is the working chamber 73 surrounded by the cylinder 71 and the piston 72.

From the perspective of converting the upward and downward motion of the pistons 72 smoothly to the rotary motion of the cam 78, each of the pistons 72 preferably includes a piston body 72A which moves slidingly in the cylinder 71 and a piston roller or a piston shoe 72C which is mounted on the piston body 72A and engages with the cam surface of the cam 78. Herein, the "piston roller" is a member that comes in contact with the cam surface of the cam 78 and rotates thereon. The "piston shoe" is a member that comes in contact with the cam surface of the cam 78 and slides thereon.

The cam 78 is an eccentric cam that is disposed eccentrically with respect to a shaft center O of a crank shaft 13 connected to the generator 12. While the pistons 72 complete one set of upward and downward motions, the cam 78 and the crank shaft 13 on which the cam 78 is mounted, complete one rotation.

The high pressure manifold 80 includes first branch channels 80A each connected to the working chambers 73 and a first merging channel 80B connected to the high pressure oil line 22. The first branch channels 80A join together and merge into the first merging channel 80B.

The low pressure manifold 82 includes second branch channels 82A each connected to the working chambers 73 and the second merging channel 82B connected to the low pressure oil line 23. The second branch channels 82A join together and merge into the second merging channel 82B.

The high pressure valve 85 is arranged in the first branch chancel 80A of the high pressure manifold 80, whereas the low pressure valve 86 is arranged in the first branch channel 82A of the low pressure manifold 82. By opening and closing the high pressure valve 85 and the low pressure valve 86, it is possible to change a communication status between the high pressure oil line 22 and each of the working chambers 73 and between the low pressure oil line 23 and each of the working chambers 73. The opening and closing of the high pressure valve 85 and the low pressure valve 86 is performed in synchronization with the upward and downward motion of the piston 72.

In the hydraulic motor 21, the pistons 72 are moved up and down by utilizing the pressure difference between the high pressure oil line 22 and the low pressure oil line 23. In the hydraulic motor 21, a motor step in which the pistons 72 move from the top dead center to the bottom dead center and a discharge step in which the pistons 72 move from the bottom dead center to the top dead center are performed repeatedly. In the motor step, the high pressure valve 85 is opened and the low pressure valve 86 is closed so as to supply the hydraulic oil having high pressure (high pressure oil) from the high pressure oil line 22 through the first merging channel 80B and the first branch channel 80A of the high pressure manifold 80 to the working chamber 73 in this order. Meanwhile, in the discharge step, the high pressure valve 85 is closed and the low pressure valve 86 is opened so as to discharge hydraulic oil in the working chamber 73 through the first branch channel 82A and the first merging channel 82B of the low pressure manifold 82 to the low pressure oil line 23 in this order.

In this manner, the high pressure oil fed into the working chamber 73 in the motor step pushes down the piston 72 to the bottom dead center, and then the crank shaft 13 rotates with the cam 78.

In the hydraulic transmission described above, at least one of the high pressure valve 65, 85 and the low pressure valve 66, 86 of the hydraulic pump 20 and the hydraulic motor 21 may be a pressure-operated check valve which is openable to allow hydraulic oil to flow in one direction due to pressure difference across the at least one of the high pressure valve 65, 85 and the low pressure valve 66, 86. In this manner, the check valve which opens and closes due to the pressure difference is used for at least one of the high pressure valve 65, 85 and the low pressure valve 66, 86 of the hydraulic pump 20 and the hydraulic motor 21, thereby saving electric power used to open and close the valve and also reducing running cost. Further, the hydraulic oil is allowed to flow in one direction, thereby preventing the hydraulic oil from regurgitating.

Further, the at least one of the high pressure valve 65, 85 and the low pressure valve 66, 86 of the hydraulic pump 20 and the hydraulic motor 21 may be an electronically controlled valve, and the controller 1 may control opening and closing of the electronically controlled valve in phased relation to cycles of movement of the piston to adjust net volume of hydraulic oil displaced by the working chambers 53, 73 on each of the cycles. In such case, the controller 1 may change number of the working chambers 53, 73 in idle state to adjust the net volume of the hydraulic oil displaced by the working chambers 53, 73 on each of the cycles, the low pressure valves 66, 86 of the working chambers 53, 73 in the idle state being kept open for a full cycle of the movement of the piston. In this manner, the number of the working chambers 53, 73 in idle state is changed to adjust the net volume of the hydraulic oil displaced by the working chambers 53, 73, thereby controlling the displacement gradually and making such control easier.

The controller 1 may also change closure timing of at least one group of the low pressure valves 66, 86 and the high pressure valves 65, 86 in each cycle of the movement of the piston to adjust the net volume of the hydraulic oil displaced by the working chambers 53, 73 on each of the cycles, the closure timing being changed commonly for all valves belonging to the at least one group of the low pressure valves 66, 86 and the high pressure valves 65, 86. In this manner, the closure timing of the valves of the same group are synchronized, thereby improving the control stability and making it easy to know the time for maintenance.

Further, the at least one of the low pressure valves 66, 86 and the high pressure valves 65, 86 of the hydraulic pump 20 and the hydraulic motor 21 may be an electronically controlled valve. The electronically controlled valve is a face-sealing poppet valve which is not openable against a prescribed pressure.

Furthermore, the at least one of the low pressure valves 66, 86 and the high pressure valves 65, 86 of the hydraulic pump 20 and the hydraulic motor 21 may be an electronically controlled valve, and the controller 1 may control opening and closing of the electronically controlled valve to counter fluctuations in torque and flow arising from asymmetric flow of hydraulic oil out of the working chamber 53, 73 during each cycle of movement of the piston. In this manner, the fluctuations in torque and flow arising from asymmetric flow is suppressed, thereby achieving a stable operation.

The specific structure of the hydraulic transmission 11 of the wind turbine generator in relation to the present invention is now explained.

### (HYDRAULIC PUMP STRUCTURE)

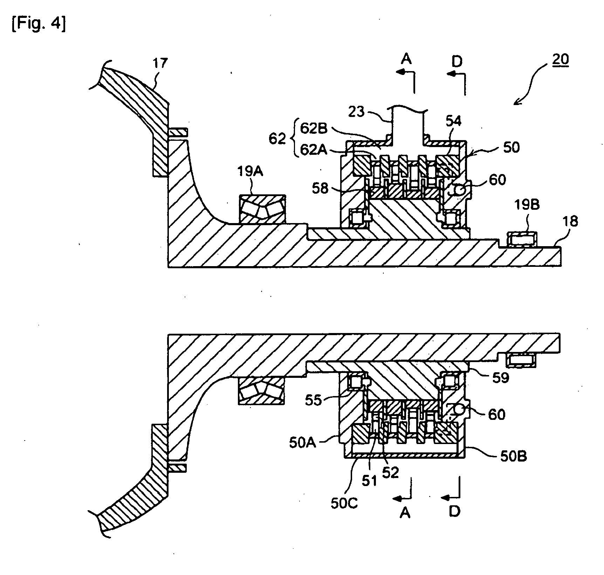

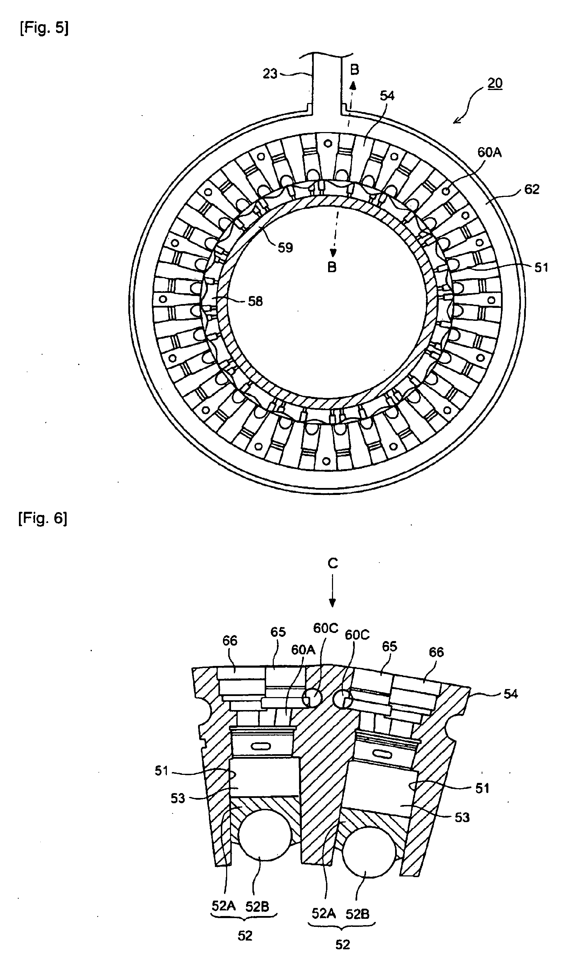

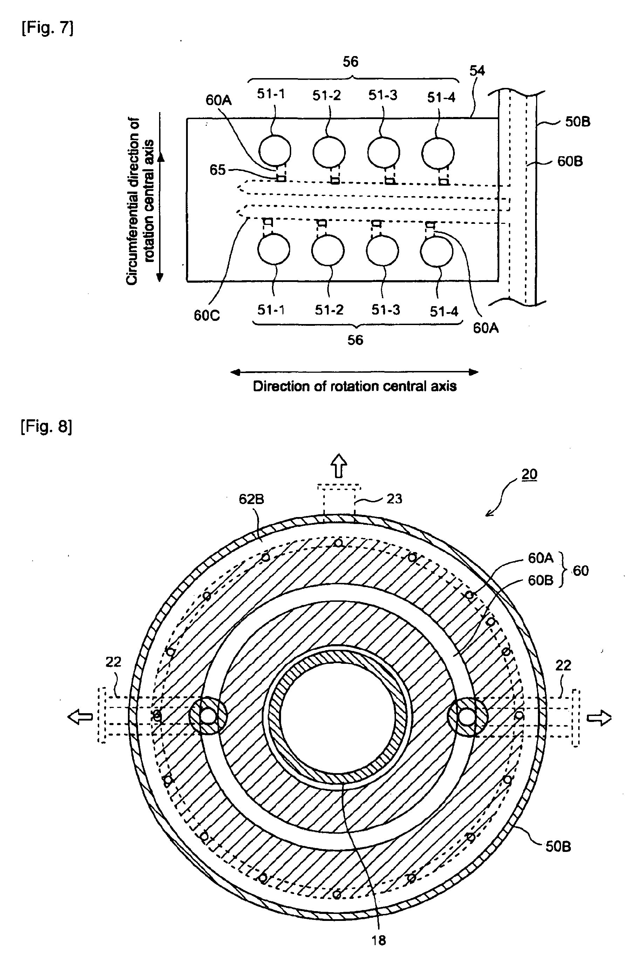

The structure of the hydraulic pump is illustrated in Fig. 4 to Fig. 8. Fig. 4 is a sectional view illustrating a specific structure of the hydraulic pump. Fig. 5 is a sectional view taken along the line A-A of Fig. 4. Fig. 6 is a sectional view taken along the line B-B of Fig. 5, showing a cylinder block of the hydraulic pump. Fig. 7 is a plan view of the cylinder block taken from the direction C of Fig. 4. Fig. 8 is a sectional view taken along the line D-D of Fig. 4, showing an endplate of the hydraulic pump.

As shown in Fig. 4 and Fig. 5, the hydraulic pump 20 is mounted on the rotating shaft 18. Specifically, the cam mount 59 is fixed to the outer circumference of the rotating shaft 18 and the cam 58 is mounted on the cam mount 59. Further, in the example illustrated in Fig. 4, the hydraulic pump 20 is arranged between rotating shaft bearings 19A and 19B for supporting the rotating shaft 18 rotatably on the nacelle side.

On the outer circumference of the cam mount 59, a pump casing 50 is fixed via a pump bearing 55. The pump casing 50 covers each part of the cylinders 51, the pistons 52, the high pressure manifold 60, the low pressure manifold 62, the high pressure valve 65 (see Fig. 6), the low pressure valve 66 and the cams 58, and also prevents the hydraulic oil from leaking to outside. The pump casing 50 includes a pair of end plates 50A and 50B arranged in the axial direction of the rotating shaft 18 and a cylindrical case 50C arranged between the pair of end plates 50A and 50B.

The hydraulic pump 20 may include a plurality of the modules, each of the modules being composed of a cylinder block 54 having at least one cylinder 51, the piston 52, the high pressure manifold 60, the low pressure manifold 62, the high pressure valve 65 and the low pressure valve 66 that are provided for each of the cylinders 51 of the cylinder block 54. The module is formed by the cylinder block 54 and attached components such as the piston 52, the high pressure valve 65 and the low pressure valve 66.

As shown in Fig. 6, each of the cylinder blocks 54 is an arc-shaped member in cross-section that extends in a direction of the rotation central axis or a circumferential direction of the rotating shaft 18.

When the cylinder block 54 extends in the direction of the rotation central axis of the rotating shaft 18, each of the cylinder blocks 54 includes at least one cylinder array 56. Each of the cylinder blocks 54 is composed of the cylinders 51-1, 51-2, 51-3 and 51-4, arranged in the axial direction of the rotating shaft 18. In the cylinder block 54, a pair of the pistons 52, the high pressure valve 65 and the low pressure valve 66 (see Fig. 6) are arranged for each of the cylinders 51.

As illustrated in Fig. 5, the hydraulic pump 20 includes a plurality of modules arranged in a circumferential direction of the rotating shaft 18, each of the modules being composed of the cylinder block 54 of the arc shape, the piston 52, the high pressure valve 65 and the low pressure valve 66 that are provided for each of the cylinders 51 of the cylinder block 54.

In the cylinder block 54, a plurality of the cylinder arrays 56 are arranged in the circumferential direction of the rotating shaft 18. Inside the cylinder block 54, a plurality of the first branch channels 60A are formed in the circumferential direction of the central rotation axis from each of the cylinders 51. A high pressure communication channel 60C is also provided inside the cylinder block between a pair of adjacent cylinder arrays in the direction of the rotation axis as shown in Fig. 7. The first branch channels 60A arranged in the same array are connected to the high pressure communication channel 60C via the high pressure valve 65. In such case, the first branch channels 60A may be connected to the working chambers 53 of the cylinders 51 belonging to the adjacent two of the cylinder arrays 56.

The high pressure communication channel 60C extends to the endplate 50B and as shown in Fig. 8, connected to the first merging channel 60B formed in the endplate 50B. The high pressure communication channel 60C has openings that are formed in the circumferential direction of the rotation central axis in the endplate 50B. The openings are in fluid communication with the first merging channel 60B. The first merging channel 60B is formed into a ring shape along the circumferential direction of the rotation central axis and connected to at least one of high pressure oil line 22. The first merging channel is formed into a circular ring shape in the drawing. However, this is not limitative and the first merging channel 60B may be formed into any shape such as a rectangular-ring shape.

In this manner, the first merging channel 60B of the high pressure manifold 60 is provided inside the endplate 50B that forms the end face of the pump casing 50. Thus, it is possible to prevent the hydraulic oil having high pressure from leaking, thereby improving liquid tightness.

Further, the first branch channels 60B are in fluid communication with the first merging channels 60A via the high pressure communication channel 60C formed between adjacent two of the cylinder arrays. Thus, it is possible to simplify the structure of the oil path, thereby saving space.

In the preferred embodiment, the first branch channels 60B are in fluid communication with the first merging channels 60A via the high pressure communication channel 60C. However, this is not limitative, the first branch channels 60B may be directly connected to the first merging channels 60A. In the preferred embodiment, a plurality of cylinder blocks 54 having an arc-shaped cross-section are arranged in the circumferential direction of the rotation central axis. However, this is not limitative and the cylinder blocks having a ring-shaped cross-section may be arranged in the circumferential direction.

With the above structure, the high pressure oil pushed out of the working chamber 53 is introduced through the first branch channel 60A and then the first merging channel 60B o the high pressure oil line 22 connected to the endplate 50B.

As shown in Fig. 4 to Fig. 6, the low pressure manifold 62 is arranged on an outer side of the cylinder block 54 in a radial direction of the rotating shaft 18 and on an inner side of the pump casing 50. The low pressure manifold 62 includes the second branch channel 62 extending on the outer side of the working chamber 53 in the radial direction of the rotating shaft 18, and the second merging channel 62B formed between the outer periphery of the cylinder block 54 and the pump casing 50.

The low pressure valve 66 is arranged in the second branch channel 62A. The second merging channel 62B is provided for the plurality of the cylinders 51 and in fluid communication with the low pressure oil line 23 connected to an upper part of the hydraulic pump 20. In this manner, the low pressure oil of the low pressure oil 23 is supplied through the second merging channel 62B and the second branch channel 62A in this order to each of the working chambers 53 via the low pressure valve 66.

As described above, the first branch channel 60A and the second branch channel 62A are formed inside of the cylinder block 54. Thus, it is no longer necessary to install a piping from the working chambers 53 to the first and second merging channels 60B, 62B respectively, thereby downsizing the hydraulic pump 20.

Further, the second merging channel 62B of the low pressure manifold 62 is formed in the annular space between the pump casing 50 and the cylinder block 54. Thus, it is possible to utilize the space between the pump casing 50 and the cylinder block 54, thereby saving space and simplifying the structure of the path.

### (HYDRAULIC MOTOR STRUCTURE)

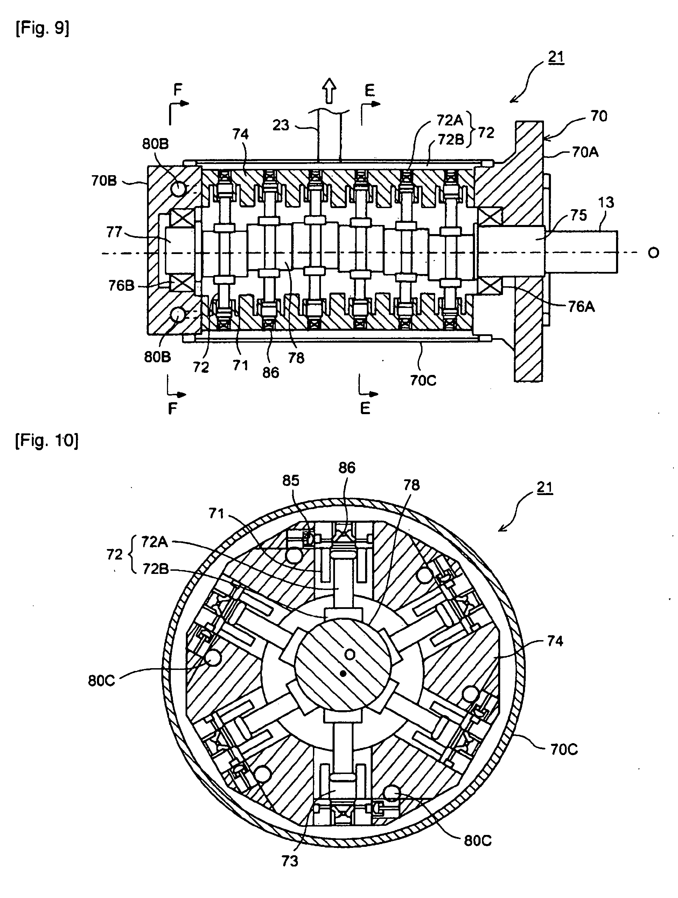

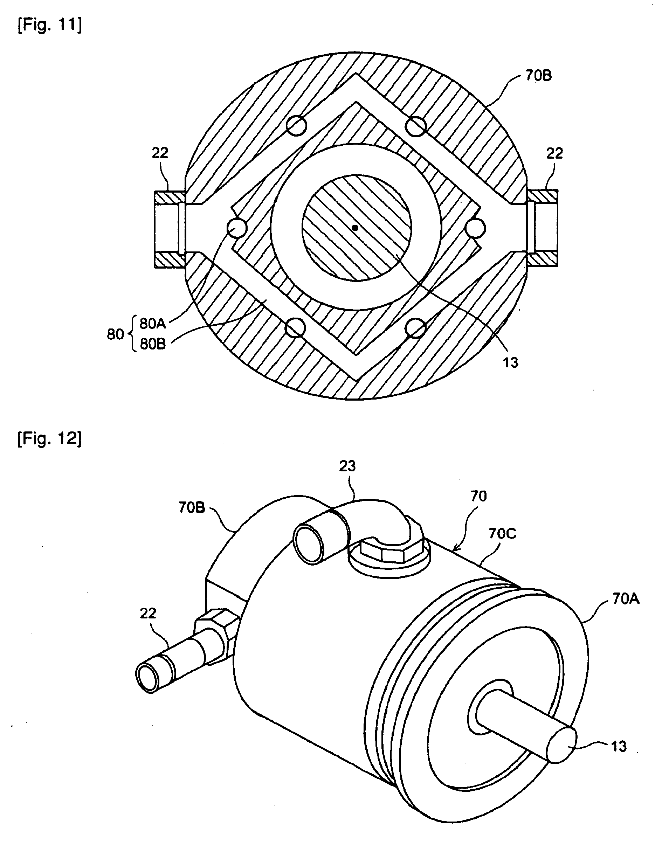

The structure of the hydraulic motor is illustrated in Fig. 9 to Fig. 12. Fig. 9 is a sectional view showing a specific structure of the hydraulic motor. FIG. 10 is a sectional view taken along the line E-E of Fig. 9. Fig. 11 is a sectional view of the endplate of the hydraulic motor, taken along the line F-F of Fig. 9. Fig. 12 is a perspective external view of the hydraulic motor.

As shown in Fig. 9 and Fig. 10, the cam 78 of the hydraulic motor 21 is an eccentric cam that is disposed eccentrically with respect to a shaft center O of a crank shaft 13 connected to the generator 12 via shaft connection part 75.

A motor casing 70 is fixed via cam bearings 76A, 76B to the shaft connection part 75 and a cam end 77 and the shaft connecting part 77 respectively connected to each end of the cam 78. The motor casing 70 covers each part of the cylinders 71, the pistons 72, the high pressure manifold 80, the low pressure manifold 82, the high pressure valve 85, the low pressure valve 86 and the cams 78, and also prevents the hydraulic oil from leaking to outside. The motor casing 70 includes a pair of end plates 70A and 70B arranged in the axial direction of the crankshaft 13 and a cylindrical case 70C arranged between the pair of end plates 70A and 70B (see Fig. 12).

In the hydraulic motor 21, provided is the cylinder block 74 formed around the cam 78. The cylinder block 74 includes at least one cylinder 71, and a pair of the piston 72, the high pressure valve 85 and the low pressure valve 86 are provided for each of the at least one cylinder 71. Further, the example illustrated in Fig. 10, the piston 72 includes a piston body 72A which moves slidingly in the cylinder 71, and a piston shoe 72C that is mounted on the piston body 72A and is in engagement with the cam surface of the cam 78.

The hydraulic motor 21 may include a plurality of the modules arranged in a circumferential direction of the crankshaft 13. Each of the modules may be composed of the cylinder block 74 partially covering the cam surface of the cam 78, the piston 72 provide for each cylinder 71 of the cylinder block 74, the high pressure valve 85 and the low pressure valve 86 that are provided for each of the at least one cylinder 71 of the cylinder block 74.

The module may be composed of the cylinder block 74 disposed circumferentially around a center axis O of the crankshaft 13 in a continuous manner and the component group attached thereto such as the piston 72, the high pressure valve 85 and the low pressure valve 86.

Each of the cylinder blocks 74 is a member extending in the direction of the rotation central axis or the circumferential direction of the cam 78.

When the cylinder block 74 extends in the direction of the rotation central axis, each of the cylinder blocks 74 includes at least one cylinder array which includes a plurality of cylinders 71 arranged in the axial direction of the cam 78. In the cylinder block 74, a pair of the pistons 72, the high pressure valve 85 and the low pressure valve 86 are arranged for each of the cylinders 71.

The hydraulic motor 21 includes a plurality of modules arranged in a circumferential direction of the cam 78, each of the modules being composed of the cylinder block 74 of the arc shape, the piston 72, the high pressure valve 85 and the low pressure valve 86 that are provided for each of the cylinders 71 of the cylinder block 74.

In the cylinder block 74, a plurality of the cylinder arrays are arranged in the circumferential direction of the cam 78. Inside the cylinder block 74, a plurality of the first branch channels 80A are formed in the circumferential direction of the central rotation axis from each of the cylinders 71. The high pressure communication channel 80C is also provided inside the cylinder block 74 between a pair of adjacent cylinder arrays in the direction of the rotation axis, in the manner similar to the structure of the hydraulic pump 20 of Fig. 7. The first branch channels 80A arranged in the same array are connected to the high pressure communication channel 80C via the high pressure valve 85. In such case, the first branch channels 80A may be connected to the working chambers 73 of the cylinders 71 belonging to the adjacent two of the cylinder arrays.

The high pressure communication channel 80C extends to the endplate 70B and as shown in Fig. 11, connected to the first merging channel 80B formed in the endplate 70B. The high pressure communication channel 80C has openings that are formed in the circumferential direction of the rotation central axis in the endplate 70B. The openings are in fluid communication with the first merging channel 80B. The first merging channel 80B is formed into a ring shape along the circumferential direction of the rotation central axis and connected to at least one of high pressure oil line 22. The first merging channel is formed into a rectangular-ring shape in the drawing. However, this is not limitative and the first merging channel 80B may be formed into any shape such as a circular-ring shape.

In this manner, the first merging channel 80B of the high pressure manifold 80 is provided inside the endplate 70B that forms the end face of the pump casing 70. Thus, it is possible to prevent the hydraulic oil having high pressure from leaking, thereby improving liquid tightness.

Further, the first branch channels 80B are in fluid communication with the first merging channels 80A via the high pressure communication channel 80C formed between adjacent two of the cylinder arrays. Thus, it is possible to simplify the structure of the oil path, thereby saving space.

In the preferred embodiment, the first branch channels 80B are in fluid communication with the first merging channels 80A via the high pressure communication channel 80C. However, this is not limitative, the first branch channels 80B may be directly connected to the first merging channels 80A.

As described above, the hydraulic transmission comprises the hydraulic pump 12, the hydraulic motor 14, the high pressure oil line 16 and the low pressure oil line 18. The discharge side of the hydraulic pump 12 is connected to the intake side of the hydraulic motor 14 and the intake side of the hydraulic pump 12 is connected to the discharge side of the hydraulic motor 14.

In the drawings, the hydraulic transmission 11 is illustrated with only one hydraulic motor 21. However, the hydraulic transmission 11 may include more than one hydraulic motor 21 and the hydraulic motors 21 may be connected to the hydraulic pump 21 via the high pressure oil lines 22 and the low pressure oil lines 23 respectively.

With the above structure, the high pressure oil supplied from the hydraulic pump 20, is introduced from the high pressure oil line 22 connected to the end plate 70B of the hydraulic motor 21 through the first merging channel 80B and then the first branch channel 80A of the high pressure manifold 80 to the working chamber 73.

The low pressure manifold 82 is arranged on an outer side of the cylinder block 74 in a radial direction of the cam 78 and on an inner side of the motor casing 70. The low pressure manifold 82 includes the second branch channel 82 extending on the outer side of the working chamber 73 in the radial direction of the cam 78, and the second merging channel 82B formed between the outer periphery of the cylinder block 74 and the motor casing 70.

The low pressure valve 76 is arranged in the second branch channel 82A. The second merging channel 82B is provided for the plurality of the cylinders 71 and in fluid communication with the low pressure oil line 23 connected to an upper part of the hydraulic motor 21. In this manner, the low pressure oil discharge from the working chamber 73 is supplied via the low pressure valve 86 through the second branch channel 82A and then the second merging channel 82B of the low pressure manifold 82 to each of the working chambers 73.

As described above, the first branch channel 80A and the second branch channel 82A are formed inside of the cylinder block 74. Thus, it is no longer necessary to install a piping from the working chambers 73 to the first and second merging channels 80B, 82B respectively, thereby downsizing the hydraulic motor 21.

Further, the second merging channel 82B of the low pressure manifold 82 is formed in the annular space between the motor casing 70 and the cylinder block 74. Thus, it is possible to utilize the space between the motor casing 70 and the cylinder block 74, thereby saving space and simplifying the structure of the path.

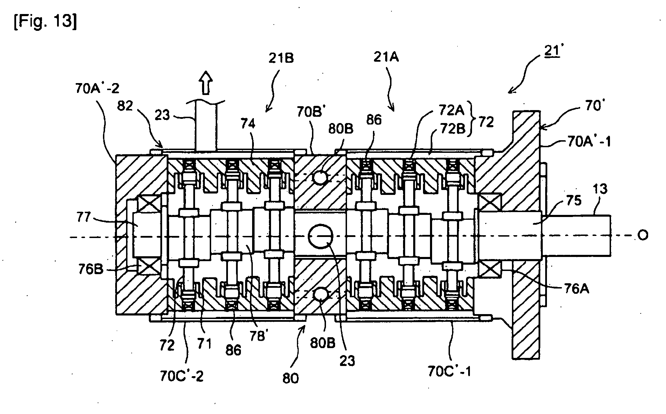

Fig. 13 shows a modified example of the above hydraulic motor. The same reference numerals are given for those components that are the same as the hydraulic motor as described above.

Fig. 13 shows a hydraulic motor 21' of a double motor type. The hydraulic motor 21' includes two motor units 21A and 21B that are connected via an end plate 70B'. Each of the motor units 21A and 21B includes the cylinder 71, the piston 72, the high pressure manifold 80, the low pressure manifold 82, the high pressure valve 85 (see Fig. 10), and the low pressure valve 86. The motor units 21A and 21B are housed in a casing 70'. The casing 70' includes the end plate 70A'-1, 70A'-2 that are provided on both end in the central axis direction of the hydraulic motor 21', an end plate 70B' provided between the end plates 70A'-1, 70A'-2, and a cylindrical case 70'C-1 or 70'C-2 provided between the end plate 70A'-1 or 70A'-2 and the end plate 70B'. The motor units 21A and 21B has a cam 78' which penetrates through the end plate 70B'. The first merging channel 80B of the high pressure manifold 80 may be provided in the end plate 70B' and the first merging channel 80 may be configured to be used by both of the motor units 21A and 21B, thereby simplifying the piping structure.

As described above, in the preferred embodiments, the high pressure valves 65, 85 are arranged in the first branch channels 60A, 80A connected to the working cylinders 53, 73 and the low pressure valves 66, 86 are arranged in the second branch channels 62A, 82A. Thus, it is possible to tweak the valves with high accuracy in accordance with the control signals to the hydraulic transmission 11. This achieves high power generation efficiency even in fluctuations of the renewable energy.

Further, the pump casing 50 and the motor casing 70 of the hydraulic pump 20 in Fig. 4 to Fig. 8 and the hydraulic motor 21 in Fig. 9 to Fig. 12 accommodate the working chambers 53, 73, the high pressure manifolds 60, 80, the low pressure manifolds 62, 82, the high pressure valves 65, 85 and the low pressure valves 66, 86, thereby downsizing the apparatus.

In particular, the high pressure manifold 60 of the hydraulic pump 20 is directly connected to the high pressure manifold 80 of the hydraulic motor 21 through the high pressure oil line 22 without any intervening valves, thereby producing power at high efficiency without causing energy loss.

While the present invention has been described with reference to exemplary embodiments, it is obvious to those skilled in the art that various changes may be made without departing from the scope of the invention.

For instance, the preferred embodiment uses the exemplary case to which the present invention is applied. But the present invention is also applicable to the tidal current generator. The tidal current generator herein indicates a power generating apparatus which is installed in places such as the ocean, river and lake and uses energy of the tidal current to produce electric power. The basic structure of the tidal current generator is the same as that of the wind turbine generator 100 except for that the rotor 10 is rotated by the tidal current instead of the wind.. The same reference numbers are used here to explain the components that are common to the wind turbine generator 100. The tidal current generator includes the rotor 10 which is rotated upon receiving the tidal current, the hydraulic transmission 11 which increases the rotation speed of the rotor 10 and the generator 12 which produces electric power.

As described above, the hydraulic transmission 11 of the tidal current generator is configured such that the high pressure valves 65, 85 are arranged in the first branch channels 60A, 80A connected to the working cylinders 53, 73 and the low pressure valves 66, 86 are arranged in the second branch channels 62A, 82A. Thus, it is possible to tweak the valves with high accuracy in accordance with the control signals to the hydraulic transmission 11. This achieves high power generation efficiency even in fluctuations of the renewable energy.

Further, the pump casing 50 and the motor casing 70 of the hydraulic pump 20 and the hydraulic motor 21 accommodate the working chambers 53, 73, the high pressure manifolds 60, 80, the low pressure manifolds 62, 82, the high pressure valves 65, 85 and the low pressure valves 66, 86, thereby downsizing the apparatus.

### Reference Signs List

- 1: Controller
- 10: Rotor
- 11: Hydraulic transmission
- 12: Generator
- 13: Crankshaft
- 18: Rotating shaft
- 20: Hydraulic pump
- 21: Hydraulic motor
- 22: High pressure oil line
- 23: Low pressure oil line
- 31, 32: Accumulator valve
- 33, 34: Accumulator
- 36: Bypass passage
- 37: High pressure relief valve
- 38: Second pressure meter
- 40: Rotation speed meter
- 41: First pressure meter
- 50: Pump casing
- 50A, 50B, 70A, 70B: End plate
- 50C, 70C: Cylindrical case
- 51, 71: Cylinder
- 52, 72: Piston
- 53, 73: Working chamber
- 58, 78: Cam
- 60, 80: High pressure manifold
- 60A, 80A: First branch channel
- 60B, 80B: First merging channel
- 62A, 82A: Second branch channel
- 62B, 82B: Second merging channel
- 65, 85: High pressure valve
- 66, 86: Low pressure valve

## Claims

1. A power generating apparatus of renewable energy type which generates power from a renewable energy source, comprising:
a rotating shaft (18) driven by the renewable energy source;
a hydraulic pump (20) driven by the rotating shaft;
a hydraulic motor (21) which is driven by pressurized oil supplied from the hydraulic pump;
a generator (12) coupled to the hydraulic motor;
a high pressure oil line (22) through which a discharge side of the hydraulic pump is in fluid communication with an intake side of the hydraulic motor; and
a low pressure oil line (23) through which an intake side of the hydraulic pump is in fluid communication with a discharge side of the hydraulic motor,
wherein each of the hydraulic pump and the hydraulic motor comprises:
a plurality of working chambers (53) each of which is surrounded by a cylinder (51) and a piston (52)reciprocating within the cylinder;
a high pressure manifold (60) including first branch channels (60A) each connected to the working chambers and a first merging channel (60B) connected to the high pressure oil line, the first branch channels joining together and merging into the first merging channel;
a low pressure manifold (62) including second branch channels (62A) each connected to the working chambers and a second merging channel (62B) connected to the low pressure oil line, the second branch channels joining together and merging into the second merging channel;
a plurality of high pressure valves (65) which are respectively provided in the first branch channels of the high pressure manifold to open and close the first branch channels;
a plurality of low pressure valves (66) which are respectively provided in the second branch channels of the low pressure manifold to open and close the second branch channels; and
a casing (50) which accommodates the working chambers, the high pressure manifold, the low pressure manifold, the high pressure valves and low pressure valves,
wherein at least one of the hydraulic pump and the hydraulic motor comprises a cylinder block (54) accommodated in the casing, the cylinders (51-1, 51-2, 51-3, 51-4) being provided inside the cylinder block,
wherein the first branch channels and the second branch channels of the at least one of the hydraulic pump and the hydraulic motor are arranged inside the cylinder block,
wherein the first merging channel of the high pressure manifold of at least one of the hydraulic pump and the hydraulic motor is provided inside an endplate that forms an end face of the casing in a direction of a rotation central axis of the at least one of the hydraulic pump and the hydraulic motor,
wherein a plurality of cylinder arrays are arranged inside the cylinder block in a circumferential direction of the at least one of the hydraulic pump and the hydraulic motor, each of the cylinder arrays being constituted of the cylinders aligned in a direction of a rotation central axis of the at least one of the hydraulic pump and the hydraulic motor,
wherein a plurality of high pressure communication channels (60C) is provided inside the cylinder block each of the high pressure communication channels being arranged between adjacent two of the cylinder arrays, and
wherein the first branch channels connected to the working chambers of the cylinders belonging to one or the adjacent two of the cylinder arrays are in fluid communication with the first merging channel via the corresponding high pressure communication channel.

2. The power generating apparatus of renewable energy type according to claim 1,
wherein in the at least one of the hydraulic pump and the hydraulic motor, an annular space between the casing and the cylinder block forms the second merging channel of the low pressure manifold.

3. The power generating apparatus of renewable energy type according to claim 1,
wherein the high pressure manifold of the hydraulic pump is directly connected to the high pressure manifold of the hydraulic motor through the high pressure oil line without any intervening valves that restrict oil flow in the high pressure oil line, and
wherein the low pressure manifold of the hydraulic pump is directly connected to the low pressure manifold of the hydraulic motor through the low pressure oil line without any intervening valves that restrict oil flow in the low pressure oil line.

4. The power generating apparatus of renewable energy type according to claim 1, further comprising:
a bypass passage which connects the high pressure oil line and the low pressure oil line to bypass the hydraulic motor; and
a high pressure relief valve which is provided in the bypass passage.

5. The power generating apparatus of renewable energy type according to claim 1, further comprising:
at least one accumulator valve; and
at least one accumulator which is connected to the high pressure oil line through the at least one accumulator valve respectively,
wherein the at least one accumulator valve opens and closes to switch between a state where the at least one accumulator is in fluid communication with the high pressure oil line and a state where the at least one accumulator is isolated from the high pressure oil line.

6. The power generating apparatus of renewable energy type according to claim 1,
wherein the high pressure valves of the hydraulic pump open to allow hydraulic oil to flow from the working chambers of the hydraulic pump to the high pressure oil line through the high pressure manifold when pressure in the working chambers exceeds pressure in the high pressure oil line.

7. The power generating apparatus of renewable energy type according to claim 1,
wherein the low pressure valves of the hydraulic pump open to allow hydraulic oil to flow from the low pressure oil line to the working chambers of the hydraulic pump through the low pressure manifold when pressure in the working chambers falls below the pressure in the low pressure oil line.

8. The power generating apparatus of renewable energy type according to claim 1,
wherein at least one of the high and low pressure valves of the hydraulic pump and the hydraulic motor is a pressure-operated check valve which is openable to allow hydraulic oil to flow in one direction due to pressure difference across the at least one of the high and low pressure valves.

9. The power generating apparatus of renewable energy type according to claim 1,
wherein the at least one of the high and low pressure valves of the hydraulic pump and the hydraulic motor is an electronically controlled valve, and
wherein the power generating apparatus of renewable energy type further comprises a controller which controls opening and closing of the electronically controlled valve in phased relation to cycles of movement of the piston to adjust net volume of hydraulic oil displaced by the working chambers on each of the cycles.

10. The power generating apparatus of renewable energy type according to claim 9,
wherein the controller changes number of the working chambers in idle state to adjust the net volume of the hydraulic oil displaced by the working chambers on each of the cycles, the low pressure valves of the working chambers in the idle state being kept open for a full cycle of the movement of the piston.

11. The power generating apparatus of renewable energy type according to claim 9,
wherein the controller changes closure timing of at least one group of the low pressure valves and the high pressure valves in each cycle of the movement of the piston to adjust the net volume of the hydraulic oil displaced by the working chambers on each of the cycles, the closure timing being changed commonly for all valves belonging to the at least one group of the low pressure valves and the high pressure valves.

12. The power generating apparatus of renewable energy type according to claim 1,
wherein the at least one of the high and low pressure valves of the hydraulic pump and the hydraulic motor is an electronically controlled valve, the electronically controlled valve being a face-sealing poppet valve which is not openable against a prescribed pressure.

13. The power generating apparatus of renewable energy type according to claim 1,
wherein the at least one of the high and low pressure valves of the hydraulic pump and the hydraulic motor is an electronically controlled valve, and
wherein the power generating apparatus of renewable energy type further comprises a controller which controls opening and closing of the electronically controlled valve to counter fluctuations in torque and flow arising from asymmetric flow of hydraulic oil out of the working chamber during each cycle of movement of the piston.

14. The power generating apparatus of renewable energy type according to claim 1,
wherein each of the low pressure valves of the hydraulic pump is a normally open solenoid closed valve which opens passively when pressure in the working chamber is less than pressure in the low pressure oil line.

15. The power generating apparatus of renewable energy type according to claim 1, further comprising:
a pressure sensor which measures pressure of hydraulic oil in the high pressure oil line, and
a temperature sensor which is provided in one of the high pressure oil line and the low pressure oil line to measure temperature of hydraulic oil in the one of the high pressure oil line and the low pressure oil line.

16. The power generating apparatus of renewable energy type according to claim 1,
wherein the power generating apparatus is a wind turbine generator which generates power from wind as the renewable energy source.

## Patentansprüche

1. Vorrichtung zur Stromerzeugung aus erneuerbarer Energie, die Strom aus einer erneuerbaren Energiequelle erzeugt und die umfasst:
eine Drehwelle (18), die von der erneuerbaren Energiequelle angetrieben wird;
eine Hydraulikpumpe (20), die von der Drehwelle angetrieben wird;
einen Hydraulikmotor (21), der von einem unter Druck stehendem Öl angetrieben wird, das von der Hydraulikpumpe zugeführt wird;
einen Generator (12), der mit dem Hydraulikmotor verbunden ist;
eine Hochdruckölleitung (22), durch die eine Abgabeseite der Hydraulikpumpe in einer Fluidkommunikation mit einer Saugseite des Hydraulikmotors steht; und
eine Niederdruckölleitung (23), durch die eine Saugseite der Hydraulikpumpe in einer Fluidkommunikation mit einer Abgabeseite des Hydraulikmotors steht;
wobei die Hydraulikpumpe und der Hydraulikmotor jeweils umfassen:
mehrere Arbeitskammern (53), von denen jede von einem Zylinder (51) umgeben ist, und wobei sich innerhalb des Zylinders ein Kolben (52) hin- und herbewegt;
eine Hochdrucksammelleitung (60), die erste Zweigkanäle (60A), von denen jeder mit den Arbeitskammern verbunden ist, und einen ersten Vereinigungskanal (60B), der mit der Hochdruckölleitung verbunden ist, enthält, wobei sich die ersten Zweigkanäle zusammenschließen und sich in dem ersten Vereinigungskanal vereinigen;
eine Niederdrucksammelleitung (62), die zweite Zweigkanäle (62A), von denen jeder mit den Arbeitskammern verbunden ist, und einen zweiten Vereinigungskanal (62B), der mit der Niederdruckölleitung verbunden ist, enthält, wobei sich die zweiten Zweigkanäle zusammenschließen und sich in dem zweiten Vereinigungskanal vereinigen;
mehrere Hochdruckventile (65), die jeweils in den ersten Zweigkanälen der Hochdrucksammelleitung bereitgestellt sind, um die ersten Zweigkanäle zu öffnen und zu schließen;
mehrere Niederdruckventile (66), die jeweils in den zweiten Zweigkanälen der Niederdrucksammelleitung bereitgestellt sind, um die zweiten Zweigkanäle zu öffnen und zu schließen; und
ein Gehäuse (50), das die Arbeitskammern, die Hochdrucksammelleitung, die Niederdrucksammelleitung, die Hochdruckventile und die Niederdruckventile beherbergt,
wobei die Hydraulikpumpe und/oder der Hydraulikmotor einen Zylinderblock (54), der in dem Gehäuse untergebracht ist, umfasst, wobei die Zylinder (51-1, 51-2, 51-3, 51-4) innerhalb des Zylinderblocks bereitgestellt sind,
wobei die ersten Zweigkanäle und die zweiten Zweigkanäle der Hydraulikpumpe und/oder des Hydraulikmotors innerhalb des Zylinderblocks angeordnet sind,
wobei der erste Vereinigungskanal der Hochdrucksammelleitung der Hydraulikpumpe und/oder des Hydraulikmotors innerhalb einer Endplatte bereitgestellt ist, die eine Stirnfläche des Gehäuses in einer Richtung einer zentralen Drehachse der Hydraulikpumpe und/oder des Hydraulikmotors bildet,
wobei mehrere Zylinderanordnungen innerhalb des Zylinderblocks in einer Umfangsrichtung der Hydraulikpumpe und/oder des Hydraulikmotors angeordnet sind, wobei jede der Zylinderanordnungen aus den Zylindern aufgebaut ist, die in einer Richtung einer zentralen Drehachse der Hydraulikpumpe und/oder des Hydraulikmotors ausgerichtet sind,
wobei mehrere Hochdruckkommunikationskanäle (60C) innerhalb des Zylinderblocks bereitgestellt sind, wobei jeder der Hochdruckkommunikationskanäle zwischen benachbarten zwei der Zylinderanordnungen angeordnet ist, und
wobei die ersten Zweigkanäle, die mit den Arbeitskammern der Zylinder, die zu einer oder zu den benachbarten zwei der Zylinderanordnungen gehören, verbunden sind, über den entsprechenden Hochdruckkommunikationskanal in einer Fluidkommunikation mit dem ersten Vereinigungskanal stehen.

2. Vorrichtung zur Stromerzeugung aus erneuerbarer Energie nach Anspruch 1,
wobei in der Hydraulikpumpe und/oder in dem Hydraulikmotor ein ringförmiger Raum zwischen dem Gehäuse und dem Zylinderblock den zweiten Vereinigungskanal der Niederdrucksammelleitung bildet.

3. Vorrichtung zur Stromerzeugung aus erneuerbarer Energie nach Anspruch 1,
wobei die Hochdrucksammelleitung der Hydraulikpumpe direkt mit der Hochdrucksammelleitung des Hydraulikmotors durch die Hochdruckölleitung verbunden ist, ohne dass dabei irgendwelche Ventile, die den Ölfluss in der Hochdruckölleitung beschränken, eingreifen, und
wobei die Niederdrucksammelleitung der Hydraulikpumpe direkt mit der Niederdrucksammelleitung des Hydraulikmotors durch die Niederdruckölleitung verbunden ist, ohne dass dabei irgendwelche Ventile, die den Ölfluss in der Niederdruckölleitung beschränken, eingreifen.

4. Vorrichtung zur Stromerzeugung aus erneuerbarer Energie nach Anspruch 1, die ferner umfasst:
einen Umgehungskanal, der die Hochdruckölleitung und die Niederdruckölleitung verbindet, um den Hydraulikmotor zu umgehen; und
ein Hochdruckentlastungsventil, das in dem Umgehungskanal bereitgestellt ist.

5. Vorrichtung zur Stromerzeugung aus erneuerbarer Energie nach Anspruch 1, die ferner umfasst:
mindestens ein Druckspeicherventil; und
mindestens einen Druckspeicher, der mit der Hochdruckölleitung durch das mindestens eine Druckspeicherventil verbunden ist,
wobei das mindestens eine Druckspeicherventil öffnet und schließt, um zwischen einem Zustand, in dem der mindestens eine Druckspeicher in einer Fluidkommunikation mit der Hochdruckölleitung steht, und einem Zustand, in dem der mindestens eine Druckspeicher von der Hochdruckölleitung isoliert ist, hin- und herzuschalten.

6. Vorrichtung zur Stromerzeugung aus erneuerbarer Energie nach Anspruch 1,
wobei die Hochdruckventile der Hydraulikpumpe öffnen, um dem Hydrauliköl zu ermöglichen, aus den Arbeitskammern der Hydraulikpumpe durch die Hochdrucksammelleitung zu der Hochdruckölleitung zu fließen, wenn der Druck in den Arbeitskammern den Druck in der Hochdruckölleitung überschreitet.

7. Vorrichtung zur Stromerzeugung aus erneuerbarer Energie nach Anspruch 1,
wobei die Niederdruckventile der Hydraulikpumpe öffnen, um dem Hydrauliköl zu ermöglichen, aus der Niederdruckölleitung durch die Niederdrucksammelleitung zu den Arbeitskammern der Hydraulikpumpe zu fließen, wenn der Druck in den Arbeitskammern unter den Druck in der Niederdruckölleitung fällt.

8. Vorrichtung zur Stromerzeugung aus erneuerbarer Energie nach Anspruch 1,
wobei mindestens eines der Hoch- und Niederdruckventile der Hydraulikpumpe und des Hydraulikmotors ein druckbetriebenes Rückschlagventil ist, das geöffnet werden kann, um dem Hydrauliköl zu ermöglichen, auf Grund einer Druckdifferenz quer über das Hoch- und/oder Niederdruckventil in eine Richtung zu fließen.

9. Vorrichtung zur Stromerzeugung aus erneuerbarer Energie nach Anspruch 1,
wobei das mindestens eine der Hoch- und Niederdruckventile der Hydraulikpumpe und des Hydraulikmotors ein elektronisch gesteuertes Ventil ist, und
wobei die Vorrichtung zur Stromerzeugung aus erneuerbarer Energie ferner eine Steuereinheit umfasst, die das Öffnen und Schließen des elektronisch gesteuerten Ventils in Phasenbeziehung zu den Bewegungszyklen des Kolbens steuert, um das Nettovolumen des Hydrauliköls, das von den Arbeitskammern bei jedem der Zyklen verdrängt wird, anzupassen.

10. Vorrichtung zur Stromerzeugung aus erneuerbarer Energie nach Anspruch 9,
wobei die Steuereinheit die Anzahl der Arbeitskammern im Leerlauf verändert, um das Nettovolumen des Hydrauliköls, das von den Arbeitskammern bei jedem der Zyklen verdrängt wird, anzupassen, wobei die Niederdruckventile der Arbeitskammern im Leerlauf für einen vollen Bewegungszyklus des Kolbens offen gehalten werden.

11. Vorrichtung zur Stromerzeugung aus erneuerbarer Energie nach Anspruch 9,
wobei die Steuereinheit die Schließzeit von mindestens einer Gruppe der Niederdruckventile und der Hochdruckventile in jedem Bewegungszyklus des Kolbens verändert, um das Nettovolumen des Hydrauliköls, das von den Arbeitskammern bei jedem der Zyklen verdrängt wird, anzupassen, wobei die Schließzeit gemeinsam für alle Ventile, die zu der mindestens einen Gruppe der Niederdruckventile und der Hochdruckventile gehören, geändert wird.

12. Vorrichtung zur Stromerzeugung aus erneuerbarer Energie nach Anspruch 1,
wobei das mindestens eine der Hoch- und Niederdruckventile der Hydraulikpumpe und des Hydraulikmotors ein elektronisch gesteuertes Ventil ist, wobei das elektronisch gesteuerte Ventil ein Dichtflächentellerventil ist, das gegen einen vorgegebenen Druck nicht geöffnet werden kann.

13. Vorrichtung zur Stromerzeugung aus erneuerbarer Energie nach Anspruch 1,
wobei das mindestens eine der Hoch- und Niederdruckventile der Hydraulikpumpe und des Hydraulikmotors ein elektronisch gesteuertes Ventil ist, und
wobei die Vorrichtung zur Stromerzeugung aus erneuerbarer Energie ferner eine Steuereinheit umfasst, die das Öffnen und Schließen des elektronisch gesteuerten Ventils steuert, um Schwankungen und Schwingungen beim Drehmoment und beim Fluss, die aus einem asymmetrischen Fluss des Hydrauliköls aus der Arbeitskammer während jedes Bewegungszyklus des Kolbens entstehen, entgegenzuwirken.

14. Vorrichtung zur Stromerzeugung aus erneuerbarer Energie nach Anspruch 1,
wobei jedes der Niederdruckventile der Hydraulikpumpe ein normalerweise geöffnetes, geschlossenes Magnetventil ist, das passiv öffnet, wenn der Druck in der Arbeitskammer kleiner als der Druck in der Niederdruckölleitung ist.

15. Vorrichtung zur Stromerzeugung aus erneuerbarer Energie nach Anspruch 1, die ferner umfasst:
einen Drucksensor, der einen Druck des Hydrauliköls in der Hochdruckölleitung misst, und
einen Temperatursensor, der in der Hochdruckölleitung oder der Niederdruckölleitung bereitgestellt ist, um die Temperatur des Hydrauliköls in der Hochdruckölleitung oder in der Niederdruckölleitung zu messen.

16. Vorrichtung zur Stromerzeugung aus erneuerbarer Energie nach Anspruch 1, wobei die Vorrichtung zur Stromerzeugung ein Windturbinengenerator ist, der Energie aus der erneuerbaren Energiequelle Wind erzeugt.

## Revendications

1. Appareil de production d'énergie du type énergie renouvelable qui produit de l'énergie à partir d'une source d'énergie renouvelable, comprenant :
un arbre tournant (18) entraîné par la source d'énergie renouvelable ;
une pompe hydraulique (20) entraînée par l'arbre tournant ;
un moteur hydraulique (21) qui est entraîné par de l'huile pressurisée alimentée depuis la pompe hydraulique ;
une génératrice (12) raccordée au moteur hydraulique ;
une canalisation d'huile sous haute pression (22) à travers laquelle un côté refoulement de la pompe hydraulique est en communication fluidique avec un côté admission du moteur hydraulique ; et
une canalisation d'huile sous basse pression (23) à travers laquelle un côté admission de la pompe hydraulique est en communication fluidique avec un côté refoulement du moteur hydraulique ;
dans lequel chacun de la pompe hydraulique et du moteur hydraulique comprend :
une pluralité de chambres de travail (53) dont chacune est entourée par un cylindre (51) et un piston (52) se déplaçant en un mouvement de va-et-vient à l'intérieur du cylindre ;
un collecteur haute pression (60) comprenant des premiers canaux de dérivation (60A) raccordés chacun aux chambres de travail et un premier canal de fusionnement (60B) raccordé à la canalisation d'huile sous haute pression, les premiers canaux de dérivation se joignant et fusionnant dans le premier canal de fusionnement ;
un collecteur basse pression (62) comprenant des deuxièmes canaux de dérivation (62A) raccordés chacun aux chambre de travail et un deuxième canal de fusionnement (62B) raccordé à la canalisation d'huile sous basse pression, les deuxièmes canaux de dérivation se joignant et fusionnant dans le deuxième canal de fusionnement ;
une pluralité de vannes haute pression (65) qui sont prévues respectivement dans les premiers canaux de dérivation du collecteur haute pression pour ouvrir et fermer les premiers canaux de dérivation ;
une pluralité de vannes basse pression (66) qui sont prévues respectivement dans les deuxièmes canaux de dérivation du collecteur basse pression pour ouvrir et fermer les deuxièmes canaux de dérivation ; et
un carter (50) qui contient les chambres de travail, le collecteur haute pression, le collecteur basse pression, les vannes haute pression et les vannes basse pression,
dans lequel au moins soit la pompe hydraulique, soit le moteur hydraulique comprend un bloc-cylindres (54) logé dans le carter, les cylindres (51-1, 51-2, 51-3, 51-4) étant prévus à l'intérieur du bloc-cylindres,
dans lequel les premiers canaux de dérivation et les deuxièmes canaux de dérivation d'au moins soit la pompe hydraulique, soit le moteur hydraulique sont disposés à l'intérieur du bloc-cylindres,
dans lequel le premier canal de fusionnement du collecteur haute pression d'au moins soit la pompe hydraulique, soit le moteur hydraulique est prévu à l'intérieur du flasque latéral qui forme une face extrême du carter dans une direction d'un axe central de rotation d'au moins soit la pompe hydraulique, soit le moteur hydraulique,
dans lequel une pluralité de groupes de cylindres sont disposés à l'intérieur du bloc-cylindres dans une direction circonférentielle d'au moins soit la pompe hydraulique, soit le moteur hydraulique, chacun de ces groupes de cylindres étant constitué par des cylindres alignés dans une direction d'un axe central de rotation d'au moins soit la pompe hydraulique, soit le moteur hydraulique,
dans lequel une pluralité de canaux de communication haute pression (60C) sont prévues à l'intérieur du bloc-cylindres, chacun de ces canaux de communication haute pression étant disposé entre deux groupes adjacents des groupes de cylindres, et
dans lequel les premiers canaux de dérivation raccordés aux chambres de travail des cylindres appartenant à un groupe ou aux deux groupes adjacents des groupes de cylindres sont en communication fluidique avec le premier canal de fusionnement via le canal de communication haute pression correspondant.

2. Appareil de production d'énergie du type énergie renouvelable selon la revendication 1,
dans lequel, dans au moins soit la pompe hydraulique, soit le moteur hydraulique, un espace annulaire entre le carter et le bloc-cylindres forme le deuxième canal de fusionnement du collecteur basse pression.

3. Appareil de production d'énergie du type énergie renouvelable selon la revendication 1,
dans lequel le collecteur haute pression de la pompe hydraulique est raccordé directement au collecteur haute pression du moteur hydraulique par l'intermédiaire de la canalisation d'huile sous haute pression sans qu'aucune vanne n'intervienne pour restreindre l'écoulement d'huile dans la canalisation d'huile sous haute pression, et
dans lequel le collecteur basse pression de la pompe hydraulique est raccordé directement au collecteur basse pression du moteur hydraulique par l'intermédiaire de la canalisation d'huile sous basse pression sans qu'aucune vanne n'intervienne pour restreindre l'écoulement d'huile dans la canalisation d'huile sous basse pression.

4. Appareil de production d'énergie du type énergie renouvelable selon la revendication 1, comprenant en outre :
un passage de dérivation qui raccorde la canalisation d'huile sous haute pression et la canalisation d'huile sous basse pression pour contourner le moteur hydraulique ; et
une vanne de décharge haute pression qui est prévue dans le passage de dérivation.

5. Appareil de production d'énergie du type énergie renouvelable selon la revendication 1, comprenant en outre :
au moins une vanne d'accumulateur ; et
au moins un accumulateur qui est raccordé à la canalisation d'huile sous haute pression par l'intermédiaire de l'au moins une vanne d'accumulateur respectivement,
dans lequel l'au moins une vanne d'accumulateur s'ouvre et se ferme pour passer entre un état dans lequel l'au moins un accumulateur est en communication fluidique avec la canalisation d'huile sous haute pression et un état dans lequel l'au moins un accumulateur est isolé de la canalisation d'huile sous haute pression.

6. Appareil de production d'énergie du type énergie renouvelable selon la revendication 1,
dans lequel les vannes haute pression de la pompe hydraulique s'ouvrent pour permettre à de l'huile hydraulique de s'écouler des chambres de travail de la pompe hydraulique vers la canalisation d'huile sous haute pression par l'intermédiaire du collecteur haute pression lorsque la pression dans les chambres de travail dépasse la pression dans la canalisation d'huile sous haute pression.

7. Appareil de production d'énergie du type énergie renouvelable selon la revendication 1,
dans lequel les vannes basse pression de la pompe hydraulique s'ouvrent pour permettre à de l'huile hydraulique de s'écouler de la canalisation d'huile sous basse pression vers les chambres de travail de la pompe hydraulique par l'intermédiaire du collecteur basse pression lorsque la pression dans les chambres de travail tombe en dessous de la pression dans la canalisation d'huile sous basse pression.

8. Appareil de production d'énergie du type énergie renouvelable selon la revendication 1,
dans lequel au moins une des vannes haute et basse pression de la pompe hydraulique et du moteur hydraulique est un clapet de retenue sous pression qui peut être ouvert pour permettre à de l'huile hydraulique de s'écouler dans un sens à cause de la différence de pression entre l'au moins une des vannes haute et basse pression.

9. Appareil de production d'énergie du type énergie renouvelable selon la revendication 1,
dans lequel l'au moins une des vannes haute et basse pression de la pompe hydraulique et du moteur hydraulique est une vanne commandée électroniquement, et
cet appareil de production d'énergie du type énergie renouvelable comprenant en outre un contrôleur qui commande l'ouverture et la fermeture de la vanne commandée électroniquement en phase avec les cycles de mouvement du piston pour régler le volume net d'huile hydraulique déplacée par les chambres de travail sur chacun des cycles.

10. Appareil de production d'énergie du type énergie renouvelable selon la revendication 9,
dans lequel le contrôleur change le nombre des chambres de travail dans un état de repos pour régler le volume net d'huile hydraulique déplacée par les chambres de travail sur chacun des cycles, les vannes basse pression des chambres de travail dans l'état de repos étant maintenues ouvertes pendant un cycle complet du mouvement du piston.

11. Appareil de production d'énergie du type énergie renouvelable selon la revendication 9,
dans lequel le contrôleur change la synchronisation de la fermeture d'au moins un groupe des vannes basse pression et des vannes haute pression dans chaque cycle du mouvement du piston pour régler le volume net de l'huile hydraulique déplacée par les chambres de travail sur chacun des cycles, la synchronisation de la fermeture étant changée de façon commune pour toutes les vannes appartenant à l'au moins un groupe des vannes basse pression et des vannes haute pression.

12. Appareil de production d'énergie du type énergie renouvelable selon la revendication 1,
dans lequel au l'au moins une des vannes haute et basse pression de la pompe hydraulique et du moteur hydraulique est une vanne commandée électroniquement, cette vanne commandée électroniquement étant une soupape champignon à étanchéité par portée qui ne peut pas être ouverte contre une pression prescrite.

13. Appareil de production d'énergie du type énergie renouvelable selon la revendication 1,
dans lequel l'au moins une des vannes haute et basse pression de la pompe hydraulique et du moteur hydraulique est une vanne commandée électroniquement, et
cet appareil de production d'énergie du type énergie renouvelable comprenant en outre un contrôleur qui commande l'ouverture et la fermeture de la vanne commandée électroniquement pour compenser les fluctuations de couple et d'écoulement résultant de l'écoulement asymétrique de l'huile hydraulique hors de la chambre de travail pendant chaque cycle de mouvement du piston.

14. Appareil de production d'énergie du type énergie renouvelable selon la revendication 1,
dans lequel chacune des vannes basse pression de la pompe hydraulique est une vanne normalement ouverte fermée par solénoïde qui s'ouvre passivement lorsque la pression dans la chambre de travail est inférieure à la pression dans la canalisation d'huile sous basse pression.

15. Appareil de production d'énergie du type énergie renouvelable selon la revendication 1, comprenant en outre :
un capteur de pression qui mesure la pression de l'huile hydraulique dans la canalisation d'huile sous haute pression ; et
un capteur de température qui est prévu dans soit la canalisation d'huile sous haute pression, soit la canalisation d'huile sous basse pression pour mesurer la température de l'huile hydraulique dans soit la canalisation d'huile sous haute pression, soit la canalisation d'huile sous basse pression.

16. Appareil de production d'énergie du type énergie renouvelable selon la revendication 1,
cet appareil de production d'énergie étant un aérogénérateur qui produit de l'énergie à partir du vent comme source d'énergie renouvelable.
